## Europäisches Patentamt

## European Patent Office

## Office européen des brevets

(11) Veröffentlichungsnummer : **0 103 564**
**B1**

(12) **EUROPÄISCHE PATENTSCHRIFT**

(45) Veröffentlichungstag der Patentschrift :
**07.05.86**

(21) Anmeldenummer : **83890153.6**

(22) Anmeldetag : **08.09.83**

(51) Int. Cl.⁴ : **F 16 K 27/04**

(54) Gehäuse für ein Schieberventil.

(30) Priorität : **09.09.82 AT 3375/82**

(43) Veröffentlichungstag der Anmeldung :
**21.03.84 Patentblatt 84/12**

(45) Bekanntmachung des Hinweises auf die Patenterteilung : **07.05.86 Patentblatt 86/19**

(84) Benannte Vertragsstaaten :
**DE FR GB IT**

(56) Entgegenhaltungen :
**DE-A- 1 920 473**
**FR-A- 1 442 389**
**GB-A-   931 956**
**GB-A- 1 593 260**
**US-A- 3 565 115**

(73) Patentinhaber : **HOERBIGER VENTILWERKE AKTIEN-GESELLSCHAFT**
**Braunhubergasse 23**
**A-1110 Wien (AT)**

(72) Erfinder : **Frisch, Herbert**
**Reibergasse 9-23**
**A-1238 Wien (AT)**

(74) Vertreter : **Klein, Adam, Dipl.Ing.**
**Patentanwalt Dipl.Ing. Adam Klein Fasangasse 49**
**A-1030 Wien (AT)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung bezieht sich auf ein Gehäuse für ein Schieberventil, das aus in Richtung der Gehäuseachse nebeneinander angeordneten Gehäuseabschnitten besteht, die eine axiale Durchgangsbohrung für den Steuerkolben bilden und je einen radialen Anschlußkanal für das gesteuerte Medium aufweisen, wobei die Gehäuseabschnitte zwischen an ihren Stirnseiten vorgesehenen Deckeln zusammengespannt sind.

Bei Schieberventilen ist es schon bekannt, die Betätigungsaufbauten nach dem Baukastenprinzip auszuführen. Für die Herstellung der Ventilgehäuse, welche den kostenaufwendigsten Teil des Gesamtventiles darstellen und in verschiedenen Varianten benötigt werden, konnte sich dieses Prinzip aber noch nicht durchsetzen. Die bisher vereinzelt bekannt gewordenen Ausführungen weisen konstruktive Merkmale auf, die ihre Einsatzmöglichkeiten verringern. Die Ventilgehäuse werden deshalb noch immer überwiegend aus einem Stück hergestellt.

Bei einer bekannten Ausführung sind gleich ausgebildete Einzelteile des Ventilgehäuses in der erforderlichen Anzahl und Ausbildung nebeneinander angeordnet und durch Zugschrauben zum fertigen Gehäuse verbunden (z. B. FR-A-1 442 389). Solche Einzelteile können aber derzeit nur aus Kunststoff ausreichend genau und preiswert hergestellt werden. Es ergeben sich deshalb Schwierigkeiten bei der Herstellung der Anschlüsse für die Zu- und Abführung des vom Ventil gesteuerten Mediums, da die Anschlußbohrungen in den die Einzelteile bildenden, verhältnismäßig dünnen Kunststoffscheiben nicht dauerhaft untergebracht werden können. Auch ist meist ein Bohrungsdurchmesser erforderlich, der größer als die Dicke der Einzelteile ist. Es ist daher bei dieser bekannten Gehäuseausbildung erforderlich, eine zusätzliche Grundplatte für die Anschlüsse zu verwenden, wodurch das Gesamtventil erheblich aufwendiger und teurer wird.

Ähnliche Nachteile ergeben sich bei der aus der DE-A-1 920 473 weiterhin bekannten Ausführung, bei welcher die scheibenförmigen Einzelteile des Ventilgehäuses durch federnde Klammern miteinander verbunden sind. Die Klammern sind jeweils nur zwischen zwei benachbarten Einzelteilen vorgesehen und pressen diese unter Zwischenlage eines Dichtringes aneinander. Auf diese Weise ist aber kein ausreichend steifes Ventilgehäuse zu erzielen, da mittels der federnden Klammern keine starre Verbindung erreicht wird, was insbesondere bei längeren Ventilgehäusen nachteilig ist. Außerdem müssen auch dort die Anschlußgewinde in den aus Kunststoff bestehenden Einzelteilen angeordnet sein, was nur bedingt und höchstens bei kleinen Anschlußbohrungen vertretbar ist. Schließlich besteht ein weiterer Nachteil der bekannten, aus Einzelteilen aufgebauten Schieberventilgehäusen darin, daß diese im Vergleich mit aus einem Stück bestehenden Ventilgehäusen nicht nur weniger widerstandsfähig sind, sondern auch weit weniger solid aussehen, was ein weiteres Verkaufshindernis darstellt.

Der Erfindung liegt die Aufgabe zugrunde, diese Nachteile zu vermeiden und die nach dem Baukastenprinzip aufgebauten Schieberventilgehäuse so zu verbessern, daß sie sowohl widerstandsfähig sind als auch eine solides Aussehen besitzen.

Das erfindungsgemäße Gehäuse ist dadurch gekennzeichnet, daß die Gehäuseabschnitte an wenigstens zwei, über ihren Umfang verteilten Stellen mit nach außen offenen Aussparungen für die Aufnahme von in Richtung der Gehäuseachse verlaufenden Verbindungsschienen versehen sind, die aus festem Material, vorzugsweise Metall, bestehen und mit den gleichfalls aus festem Material wie Metall bestehenden Deckeln oder diese bildenden Betätigungsaufbauten od. dgl. zu einem starren Rahmen verbunden sind. Bei dieser Ausbildung können einfach und billig herstellbare Gehäuseabschnitte aus Kunststoff verwendet werden, die durch den von den in Achsrichtung verlaufenden Verbindungsschienen und den Deckeln gebildeten starren Rahmen in sicherer und dichter Verbindung zueinander gehalten werden. Das erfindungsgemäße Ventilgehäuse ist deshalb nicht nur besonders stabil, sondern es besitzt auch ein ähnlich solides Aussehen, wie ein einstückiges Gehäuse. Durch bloße Verwendung verschieden langer Verbindungsschienen, die aus einfachen Metallprofilen bestehen, können beliebig viele Gehäuseabschnitte zu einem Ventilgehäuse mit der gewünschten Länge zusammengesetzt werden.

Bei einer bevorzugten Ausführung der Erfindung sind in den Verbindungsschienen Anschlußbohrungen für die Zu- und Abführung des gesteuerten Mediums vorgesehen, die mit den Anschlußkanälen in den Gehäuseabschnitten fluchten. Dadurch entfallen Gewindebohrungen in den Kunststoffteilen des Gehäuses, wo sie nur wenig haltbar sind, ohne daß eine eigene Grundplatte erforderlich ist.

Zur einfachen Erzielung einer druckdichten Verbindung können die Verbindungsschienen im Bereich der innenliegenden Enden der Anschlußbohrungen mit Eindrehungen versehen sein, in die zylindrische Fortsätze der Gehäuseabschnitte mit den Anschlußkanälen hineinragen, wo sie von einer Ringdichtung umgeben sind. Auf diese einfache Weise ist die sichere Zu- und Abführung des gesteuerten Mediums sichergestellt.

In weiterer Ausgestaltung der Erfindung können die Gehäuseabschnitte in der axialen Ansicht H-förmig ausgebildet sein und die Verbindungsschienen ein rechteckiges oder quadratisches Profil aufweisen, das eng in die beiden rechteckigen, nutförmigen Aussparungen der H-förmigen Gehäuseabschnitte paßt. Hiebei handelt es sich um eine einfache und zweckmäßige Ausführungsform des erfindungsgemäßen Gehäuses, die aus einfachen Einzelteilen aufgebaut ist.

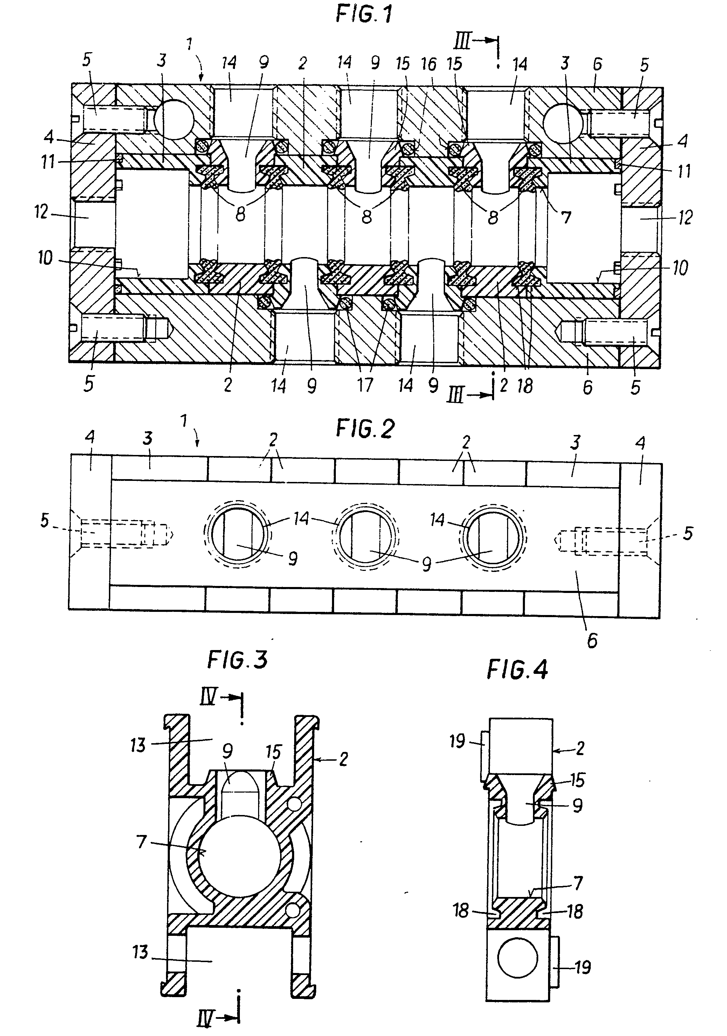

Weitere Einzelheiten und Vorteile der Erfindung sind der nachfolgenden Beschreibung eines Ausführungsbeispieles zu entnehmen, das in der Zeichnung dargestellt ist. In dieser zeigt Fig. 1 einen axialen Mittelschnitt durch ein erfindungsgemäßes Ventilgehäuse, Fig. 2 eine Draufsicht auf das Ventilgehäuse, Fig. 3 einen Querschnitt durch einen Gehäuseabschnitt nach der Linie III-III in Fig. 1 und Fig. 4 einen Schnitt durch den Gehäuseabschnitt nach der Linie IV-IV in Fig. 3.

Das dargestellte Ventilgehäuse 1 besteht aus mehreren scheibenförmigen Gehäuseabschnitten, die parallel nebeneinander angeordnet sind. Im Ausführungsbeispiel nach den Fig. 1 und 2 sind fünf Gehäuseabschnitte 2 vorgesehen, die im mittleren Teil des Ventilgehäuses 1 angeordnet sind und an die Endabschnitte 3 anschließen. Die Gehäuseabschnitte 2, 3 sind durch Deckel 4 zusammengehalten, die durch Schrauben 5 mit Verbindungsschienen 6 zu einem starren Rahmen verbunden sind. Die Verbindungsschienen 6 verlaufen über und unter den Gehäuseabschnitten 2, 3 und bestehen aus einem rechteckigen Metallprofil. Auch die Deckel 4 sind zweckmäßig aus Metall gefertigt, wogegen die Gehäuseabschnitte 2, 3 in vorteilhafter Weise aus Kunststoff bestehen, so daß sie genau und preiswert hergestellt werden können.

Die Gehäuseabschnitte 2, 3 bilden im Ventilgehäuse 1 eine axiale Durchgangsbohrung 7 für den nicht dargestellten Schieberkolben, der mit Hilfe von profilierten Dichtringen 8 abgedichtet ist, die zwischen den einzelnen Gehäuseabschnitten 2 eingespannt und verankert sind. Die im mittleren Teil des Ventilgehäuses 1 liegenden Gehäuseabschnitte 2 sind je mit einem radialen Anschlußkanal 9 versehen, durch den das gesteuerte Medium zu- und abgeführt werden kann. In den Endabschnitten 3 sind Zylinderbohrungen 10 vorgesehen, die für die Aufnahme von Betätigungskolben bestimmt und gegen die Deckel 4 durch Dichtungen 11 abgedichtet sind. Für die Zu- und Abführung des Druckmittels zu den Betätigungskolben sind in den Deckeln 4 Anschlüsse 12 vorgesehen. Im Bereich der Zylinderbohrungen 10 könnten aber auch andere Betätigungseinrichtungen für die Verstellung des Schieberkolbens mit diesem verbunden sein. Die Deckel 4 können durch andere Betätigungsaufbauten ersetzt werden, z. B. durch einen Gehäuseteil mit einem Handhebel.

Die Verbindungsschienen 6 sind in den Gehäuseabschnitten 2, 3 versenkt angeordnet. Diese weisen an diametral gegenüberliegenden Stellen nach außen offene Aussparungen 13 auf, wie insbesondere aus Fig. 3 zu erkennen ist. In diese Aussparungen 13 sind die Verbindungsschienen 6 eng passend eingelegt. Im Bereich der Anschlußkanäle 9 für die Zu- und Abführung des gesteuerten Mediums sind in die Verbindungsschienen 6 Anschlußbohrungen 14 eingearbeitet, die mit den Anschlußkanälen 9 fluchten. Die Anschlußkanäle 9 befinden sich in zylindrischen Fortsätzen 15 der Gehäuseabschnitte 2, die je in eine Eindrehung 16 am innenliegenden Ende einer Anschlußbohrung 14 hineinragen. Die Abdichtung an diesen Stellen erfolgt mit Hilfe von Ringdichtungen 17, welche die zylindrischen Fortsätze 15 umgeben.

Aus den Fig. 3 und 4 geht hervor, daß die beim Ausführungsbeispiel verwendeten mittleren Gehäuseabschnitte 2 in axialer Draufsicht eine H-förmige Gestaltung aufweisen. In der Mitte befindet sich die Durchgangsbohrung 7 für den Schieberkolben, von der der zylindrische Fortsatz 15 mit dem Anschlußkanal 9 nach oben führt. Die Aussparungen 13 für die Verbindungsschienen 6 sind rechteckig ausgebildet, wobei auch die Verbindungsschienen 6 ein einfaches rechteckiges Profil besitzen. An den Seiten der Gehäuseabschnitte 2 sind Ringnuten 18 für die Aufnahme und Einspannung der Dichtringe 8 ausgenommen. Aus Fig. 4 ist außerdem zu erkennen, daß an den Seiten der Gehäuseabschnitte 2 vorspringende Rippen 19 vorgesehen sind, die in dazu passende Nuten benachbarter Gehäuseabschnitte eingreifen und so eine Zentrierung der Abschnitte gegeneinander bewirken.

Es ist zu erkennen, daß eine beliebige Anzahl von Gehäuseabschnitten 2 zu einem Schieberventilgehäuse 1 zusammengefügt werden kann, wobei lediglich Verbindungsschienen 6 mit passender Länge verwendet werden müssen. Die Verbindungsschienen 6 bestehen aus einfachen Metallprofilen und sind daher unschwer in der entsprechenden Länge herzustellen. Es ist also unter Verwendung des Baukastenprinzips möglich, mit wenigen Einzelteilen Schieberventilgehäuse unterschiedlicher Größe und Funktion billig aufzubauen.

**Patentansprüche**

1. Gehäuse für ein Schieberventil, das aus in Richtung der Gehäuselängsachse nebeneinander angeordneten Gehäuseabschnitten (2, 3) besteht, die eine axiale Durchgangsbohrung (7) für den Schieberkolben bilden und je einen radialen Anschlußkanal (9) für das gesteuerte Medium aufweisen, wobei die Gehäuseabschnitte (2, 3) zwischen an ihren Stirnseiten vorgesehenen Deckeln (4) zusammengespannt sind, dadurch gekennzeichnet, daß die Gehäuseabschnitte (2, 3) an wenigstens zwei, über ihren Umfang verteilten Stellen mit nach außen offenen Aussparungen (13) für die Aufnahme von in Richtung der Gehäuselängsachse verlaufenden Verbindungsschienen (6) versehen sind, die aus festem Material, vorzugsweise Metall, bestehen und mit den gleichfalls aus festem Material wie Metall bestehenden Deckeln (4) oder diese bildenden Betätigungsaufbauten od. dgl. zu einem starren Rahmen verbunden sind.

2. Gehäuse nach Anspruch 1, dadurch gekennzeichnet, daß in den Verbindungsschienen (6) Anschlußbohrungen (14) für die Zu- und Abführung des gesteuerten Mediums vorgesehen sind, die mit den Anschlußkanälen (9) in den Gehäuseabschnitten (2) fluchten.

3. Gehäuse nach Anspruch 2, dadurch gekennzeichnet, daß die Verbindungsschienen (6) im Bereich der innenliegenden Enden der Anschlußbohrungen (14) mit Eindrehungen (16) versehen sind, in die zylindrische Fortsätze (15) der Gehäuseabschnitte (2) mit den Anschlußkanälen (9) hineinragen, wo sie von einer Ringdichtung (17) umgeben sind.

4. Gehäuse nach Anspruch 1, 2 oder 3, dadurch gekennzeichnet, daß die Gehäuseabschnitte (2) in der axialen Ansicht H-förmig ausgebildet sind und die Verbindungsschienen (6) ein rechteckiges oder quadratisches Profil aufweisen, das eng in die beiden rechteckigen, nutförmigen Aussparungen (13) der H-förmigen Gehäuseabschnitte (2) paßt.

## Claims

1. A housing for a slide valve comprising housing sections (2, 3) arranged adjacent to one another in the direction of the longitudinal axis of the housing, which form an axial through bore (7) for the slide piston and which comprise in each case a radial connection duct (9) for the controlled medium, the housing sections (2, 3) being clamped together between covers (4) provided on their end faces, characterised in that the housing sections (2, 3) are provided at at least two points distributed over their circumference with recesses (13), which are open towards the outside, for receiving connection strips (6), which are made of solid material, preferably metal, and which are connected to the covers (4), also made of solid material such as metal, or operating superstructures or the like forming covers, to form a rigid frame.

2. A housing according to claim 1, characterised in that connection bores (14), which are aligned with the connection ducts (9) in the housing sections (2), are provided in the connecting strips (6) for the supply and removal of the controlled medium.

3. A housing according to claim 2, characterised in that the connection strips (6) are provided with indentations (16) in the region of the internal ends of the connection bore (14), into which indentations cylindrical extensions (15) of the housing sections (2) containing the connection ducts (9) project, and are encircled by a ring seal (17).

4. A housing according to claims 1, 2 or 3, characterised in that the housing sections (2) are formed in the shape of an H in axial cross-section, and the connection strips (6) have a rectangular or square profile, which fits tightly into the two rectangular, groove-shaped recesses (13) of the H-shaped housing sections (2).

## Revendications

1. Corps de distributeur à tiroir, qui est composé de segments de corps (2, 3) juxtaposés dans la direction de l'axe longitudinal du corps, qui forment ensemble un alésage axial traversant (7) pour recevoir le tiroir, et dont chacun présente un canal de raccordement radial (9) pour le fluide commandé, les segments de corps (2, 3) étant maintenus assemblés par serrage entre des fonds (4) prévus à leurs faces terminales, caractérisé en ce que les segments (2, 3) du corps sont munis, en au moins deux points répartis sur leur périphérie, d'évidements (13) s'ouvrant vers l'extérieur et destinés à recevoir des barres d'assemblage (6) s'étendant parallèlement à l'axe longitudinal du corps, qui sont faites d'une matière solide, de préférence de métal, et qui sont assemblées à des fonds (4), ou des éléments d'actionnement formant de tels fonds, ou éléments équivalents, également faits d'une matière solide telle qu'un métal, pour constituer un cadre rigide.

2. Corps selon la revendication 1, caractérisé en ce que, dans les barres d'assemblage (6) sont prévus des perçages de raccordement (14) pour l'arrivée et le départ du fluide commandé, qui sont alignés sur les canaux de raccordement (9) formés dans les segments (2) du corps.

3. Corps selon la revendication 2, caractérisé en ce que, dans la région des extrémités intérieures des perçages de raccordement (14), les barres d'assemblage (6) sont munies de lamages (16) dans lesquels font saillie des prolongements cylindriques (15) des segments (2) du corps, qui présentent eux-mêmes les canaux de raccordement (9), ces prolongements étant entourés par un joint annulaire (17) à l'intérieur de ces lamages.

4. Corps selon l'une des revendications 1, 2 et 3, caractérisé en ce que les segments (2) du corps présentent, en vue axiale, une forme en H et en ce que les barres d'assemblage (6) présentent un profil rectangulaire ou carré qui s'ajuste sans jeu dans les deux évidements rectangulaires (13), en forme de rainure, des segments (2) en forme de H du corps.

**FIG.1**

**FIG.2**

**FIG.3**

**FIG.4**